(19) Europäisches Patentamt / European Patent Office / Office européen des brevets

(11) **EP 3 201 285 B1**

(12) **EUROPEAN PATENT SPECIFICATION**

(45) Date of publication and mention
of the grant of the patent:
**20.01.2021 Bulletin 2021/03**

(21) Application number: **15780804.9**

(22) Date of filing: **01.10.2015**

(51) Int Cl.:
***C09K 5/06*** (2006.01)

(86) International application number:
**PCT/EP2015/072700**

(87) International publication number:
**WO 2016/050912 (07.04.2016 Gazette 2016/14)**

(54) **HYGROSCOPIC SALT APPARATUS**

HYGROSKOPISCHE SALZVORRICHTUNG

APPAREIL À SEL HYGROSCOPIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.10.2014 GB 201417444**

(43) Date of publication of application:
**09.08.2017 Bulletin 2017/32**

(73) Proprietors:
• **Université Libre de Bruxelles
1050 Bruxelles (BE)**
• **Université de Mons
7000 Mons (BE)**

(72) Inventors:
• **D'ANS, Pierre
B-6041 Gosselies (BE)**
• **DEGREZ, Marc
B-6041 Gosselies (BE)**
• **FRERE, Marc
B-7000 Mons (BE)**
• **COURBON, Emilie
B-7000 Mons (BE)**

(74) Representative: **ARC-IP
ARC-IP sprl
Rue Emile Francqui 4
1435 Mont-Saint-Guibert (BE)**

(56) References cited:
CN-A- 102 878 838     JP-A- S6 048 494
US-A- 4 153 047       US-A- 4 291 755
US-A- 4 491 172       US-A1- 2003 146 409
US-A1- 2008 312 359   US-A1- 2012 264 600
US-A1- 2013 105 727

• WU ET AL: "Effects of impregnating variables on
dynamic sorption characteristics and storage
properties of composite sorbent for solar heat
storage", SOLAR ENERGY, PERGAMON PRESS.
OXFORD, GB, vol. 81, no. 7, 26 June 2007
(2007-06-26), pages 864-871, XP022131859, ISSN:
0038-092X, DOI:
10.1016/J.SOLENER.2006.11.013

**Description**

The present invention relates to a hygroscopic salt apparatus, for example a hygroscopic salt heating apparatus and particularly to materials for metal components, notably for a heat exchanger, for such an apparatus.

A hygroscopic salt heating system selectively stores and releases energy by changing the atmospheric conditions to which its hygroscopic salt is subjected. Heat is released by causing hydration of a dehydrated form of the salt, for example by introducing water vapour into controlled atmospheric condition in which the salt is kept; subsequently de-hydrating a hydrated form of the salt, notably by heating, allows energy to be "stored" for release in a subsequent re-hydration. One application for such heating systems is for storage of thermal energy produced, for example by solar collectors, during the summer and subsequent controlled release of this energy to heat a building during the winter. Such a heating system should have longevity of several years, for example of at least 10, 15, 20 or 30 years; consequently the components of the system and the overall interaction between these components should be resistant to any deterioration over such durations.

Unfortunately, the hygroscopic salts of interest for such systems tend to be highly corrosive with respect to metals especially when in a liquid form but also when in solid form. During a typical dehydration/hydration cycle the salt is subject to morphological changes and may undergo a partial liquefaction, particularly if atmospheric conditions are not perfectly controlled. Whilst metal parts, for example of a heat exchanger, liable to come into contact with hygroscopic salts in heating systems could be coated with, or even replaced by, a non-corrosive material such as a plastic, this would decrease their thermal conductivity and thus decrease the heat generating efficiency of the system. Increasing the thickness of such metal parts so that the amount of corrosion over the lifetime of the heating system can be tolerated brings similar disadvantages. Similarly, other metal parts cannot be simply replaced or coated without detriment.
US 4491172 discloses an energy storage apparatus comprising a container filled with a heat storage medium.
US 2013/105727 discloses a heat storage composition which may be used in a heat tank. CN 102878838 discloses a heat pipe in which a heat conducting medium is sealed.
US 2003/146409 discloses a corrosion test for snow and ice-melting granules.
US 2008/312359 discloses a thermal stabilizing composition, wherein the composition comprises a phase change material admixed with a support material and a nucleator.
US 2012/264600 discloses a composite adsorbent material comprising a porous host material of activated carbon impregnated with silica-gel and calcium chloride.

Consequently, one of the aims of the present invention is to provide a hygroscopic salt apparatus in which metal parts will withstand corrosion over the lifetime of use.

According to one of its aspect, the present invention provides a hygroscopic salt apparatus as defined in claim 1. Additional aspects are defined in other independent claims. The dependent claims define preferred and/or alternative embodiments.

According to the invention, it has surprisingly been found that particular combinations of heat medium storage hygroscopic salts, notably in specific forms, with particular materials provide a corrosion rate which renders the combination suitable for lifetime use in an apparatus, for example in a heating system. It has also surprisingly been found that the form of the hygroscopic salt is important in the selection of the heat medium storage/materials combination.

The hygroscopic salt may comprise an alkaline earth bromide and/or an alkaline earth chloride; preferably the hygroscopic salt comprises strontium bromide and/or calcium chloride.

The hygroscopic salt may be arranged within the pores of a porous matrix. Alternatively, the hygroscopic salt may be in an exposed form, that is to say in a form in which it is not retained within a supporting structure, for example in the form of a crystal salt. Incorporating the salt in a porous matrix to provide a composite material facilitates contact between the salt and its surrounding atmosphere; it thus facilitates heat exchange.
The porous matrix may be silicagel or activated carbon. The hygroscopic salt may be as described in UK patent application GB 1411286.6.

The material susceptible to come into contact with the hygroscopic salt in the apparatus may form a heat exchanger or part of a heat exchanger notably adapted to transfer thermal energy from the hygroscopic salt to a heat transfer fluid during hydration of the hygroscopic salt. The transfer fluid, which may comprise water vapour or liquid water, may circulate within the heat exchanger; the heat exchanger may comprise a metal layer supporting a plurality of metal pipes in which a heat-transfer fluid flows or two joined metallic layers which together create hollow channels in which the heat-transfer fluid flows. The material may form part of a reaction vessel, a hygroscopic salt container, a hygroscopic salt support, a hygroscopic salt conveyor, a hygroscopic salt handling apparatus or a hygroscopic salt transportation apparatus.

Circumstances in which the material is susceptible to come into contact with the hygroscopic salt include where:

-    there is direct contact between the salt and the material, for example where the salt in solid form lies on or over the material;

- there is direct contact between a porous matrix comprising the salt and the material, for example where a porous matrix comprising the salt in solid form lies on or over the material;
- there is the possibility of a solution comprising the salt coming into contact with the material, for example where the salt in solid form or a porous matrix comprising the salt in solid form lies on or over the material; and
- there is the possibility of a spray or vapour carrying the salt coming into contact with the material.

Where the material is stainless steel, this may comprise a combination of Fe and between 10 wt% and 25 wt% Cr; it may, in addition comprise up to 21 wt% Ni. Where the material is brass, this may comprise Cu and Zn with preferably no more than 40 wt% Zn. Where the material is bronze, this may comprise Cu and Sn with preferably no more than 16 wt% Sn.

The quantity of any impurities in the selected material is less than 10% wt; it is preferably less than 5% wt, more preferably less than 3% wt or 2% wt. The selected materials may be of commercial purity.

The material may have a thickness which is $\leq$ 5 mm, notably $\leq$ 3 mm or $\leq$ 2 mm.

The material in the pairing of the hygroscopic salt and the material may have a corrosion rate of less than 20$\mu$m/year, preferably less than 15$\mu$m/year, more preferably less than 10$\mu$m/year.

The apparatus may be a hygroscopic salt heating system. It may be a domestic hygroscopic salt heating system, that is to say a heating system adapted or configured to heat and/or provide hot water for a building, for example a residential building, a house, one or more flats, one or more offices. The heating system may undergo conditions so that its hygroscopic salt when at least partially hydrated may be at least partially dehydrated by subjecting it to a temperature in the range 30°C to 150°C, preferably 40°C to 120°C, more preferably 60°C to 110°C, even more preferably 70°C to 100°C during a period of at least 5 minutes, 10 minutes, 30 minutes, 45 minutes, 60 minutes or 90 minutes. The at least partially dehydrated hygroscopic salt may be stored for a period of at least 1 hour, at least 4 hours, preferably at least 4 days, more preferably at least 4 weeks, even more preferably at least 4 months prior to contact with water to release its hydration energy. The at least partially dehydrated hygroscopic salt may be exposed to water, in vapour form, in order to rehydrate the hygroscopic salt whilst removing the heat from the hygroscopic salt at a temperature in the range 20°C to 80°C, preferably 20°C to 60°C, more preferably 30°C to 50°C. The heating system may be used to store energy prior to its subsequent release for a period of at least 168 hours (about one week), at least 672 hours (about four weeks), at least 2016 hours (about 12 weeks) or at least 4032 hours (about 24 weeks).

Preferably, the hygroscopic salt is dispersed substantially homogeneously in a porous matrix but without completely filling the porosity; this allows a large amount of salt to be supported whilst facilitating accessibility for exchange of water vapour between the salt and its surrounding atmosphere. The form of grains facilities incorporation of the material in an energy storage system and provides a large surface area which also facilitates contact between the composite material and its surrounding atmosphere. The grains may have an average diameter of at least 50$\mu$m and/or less than 3mm. The amount of hygroscopic salt in the grains with respect to the total pore volume of the porous matrix in the grains may be no more than 95%, no more than 90%, no more than 85%, preferably no more than 80%.

In a preferred embodiment, the porous matrix comprises grains having a peripheral zone and a central zone, the peripheral zone of a grain being a portion of the grain extending from a periphery of the grain towards the centre of the grain for a distance of about 1/10th of the diameter of the grain, and the central zone of a grain being a portion of the grain extending from the centre of the grain for a distance of about 1/10th of the diameter of the grain towards the periphery of the grain; the peripheral zone has a peripheral zone hygroscopic metal concentration HMCp expressed as the mass percentage of metal(s) of the hygroscopic salt(s) at the peripheral zone HMp divided by the mass percentage of i) the carbon of the activated carbon or ii) the silicon of the silica gel at the peripheral zone HPp (i.e. HMCp= HMp/ HPp); the central zone has a central zone hygroscopic metal concentration HMCc expressed as the mass percentage of metal(s) of the hygroscopic salt(s) at the central zone HMc divided by the mass percentage of i) the carbon of the activated carbon or ii) the silicon of the silica gel at the central zone HPc (i.e. HMCc= HMc/ HPc); and the central zone hygroscopic metal concentration is greater than or equal to 0.7 times, preferably 0.8 times, the peripheral zone hygroscopic metal concentration (HMCc $\geq$ 0.7 HMCp, preferably HMCc $\geq$ 0.8 HMCp).

The combination of hygroscopic salt and porous matrix may be selected from the following pairings, preferably having the properties shown below:

| pairing of porous matrix and hygroscopic salt | Preferred water adsorption measured between 80°C and 30°C at 12.5mbar | More preferred water adsorption measured between 80°C and 30°C at 20mbar |
|---|---|---|
| activated carbon and strontium bromide | at least 0.19g/g, preferably at least 0.20g/g | at least 0.19g/g, preferably at least 0.20g/g |

(continued)

| pairing of porous matrix and hygroscopic salt | Preferred water adsorption measured between 80°C and 30°C at 12.5mbar | More preferred water adsorption measured between 80°C and 30°C at 20mbar |
|---|---|---|
| activated carbon and calcium chloride | at least 0.28g/g, preferably at least 0.29g/g | At least 0.44g/g, preferably at least 0.45g/g, |
| silicagel and calcium chloride | at least 0.35 g/g, preferably at least 0.36g/g, more preferably at least 0.38g/g | At least 0.60g/g, more preferably at least 0.62g/g, more preferably at least 0.64g/g |
| silicagel and strontium bromide | at least 0.18g/g, preferably at least 0.20g/g, more preferably at least 0.21 g/g | at least 0.25g/g, preferably at least 0.26g/g, more preferably at least 0.28g/g |

An embodiment of the invention will now be described, by way of example only, with reference to the accompanying drawings of which:

Fig 1 is a schematic cross section of part of a heating system; and
Fig 2 is a cross section through a grain of composite material.

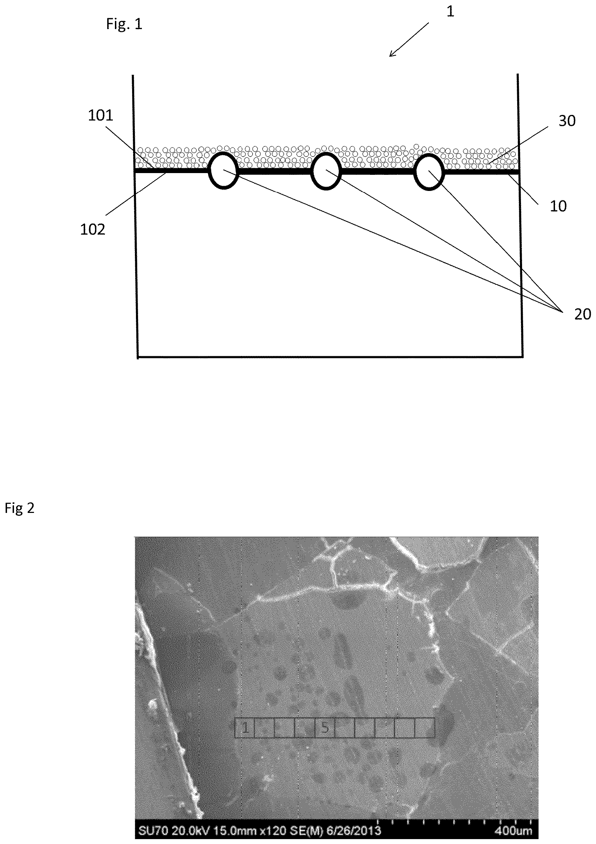

The hygroscopic salt heating system 1 of Fig 1 comprises a metal heat exchanger 10 having a top plate 101 and a bottom plate 102 which are joined together so as to define a plurality of hollow channels 20 extending along and between the two plates. A flow a water in the channels evacuates heat from a layer of hygroscopic salt 30 supported on the plates and is used to supply radiators and/or a hot water system of a building either directly or via an immersion heater.

Experimental conditions for studying corrosion.

A hygroscopic salt (calcium chloride or strontium bromide) having an average grain diameter of about 500$\mu$m is prepared by manually crushing grains of hygroscopic salt with a mortar and pestle during a time of about 1 minute. A metal sample having two principal dimensions of at least 10mm (for example a 10mm x 10mm plate) is suitably prepared for corrosion testing (including polishing of its corners, etching to remove existing corrosion products if necessary, cleaning with Milli-Q water and drying) and is weighted with a precision of at least 0.1 mg and then placed in a glass recipient so that it is completely surrounded by the hygroscopic salt. The recipient is then placed in a calibrated climatic chamber, Heraeus Vötsch VTRK 300.
For each hygroscopic salt, four climatic conditions are tested using a series of recipients each containing an individual metal sample to be tested. For each of the four tests, the recipients containing the metal samples in the hygroscopic salt are held in the climatic condition for about 30 days before being taken out and examined for corrosion.
For the strontium bromide test, the conditions are:

| Test conditions | Comments |
|---|---|
| Tc = 65°C, Td = 64°C (i.e. RH = 95%); | This represents a typical operating condition in which the salt is a deliquescent liquid |
| Tc = 65°C, Td = 33°C (i.e. RH = 20%); | This represents a typical operating condition in which the salt is mono-hydrated |
| Tc = 80°C, Td = 56°C (i.e. RH = 35%); | This represents an extreme temperature for the operating conditions at which a high corrosion rate would be expected and at which the salt is hexa-hydrated |
| Tc = 80°C, Td = 48°C (i.e. RH = 24%). | This represents an extreme temperature for the operating conditions at which a high corrosion rate would be expected and at which the salt is mono-hydrated |

where Tc is the temperature inside the chamber, Td is the dew point (which is related to the relative humidity (RH) or water pressure inside the chamber).
For the calcium chloride, the test conditions are:

| Test conditions | Comments |
|---|---|
| Tc = 35°C, Td = 10.1°C (i.e. RH = 22 %) | This low temperature Tc corresponds to a extraction of low temperature heated water from the system; the low dew point corresponds to a low operating vapour pressure at which adsorption of the salt can still occur. The salt is close to deliquescence. |
| Tc = 80°C, Td = 10.1°C (i.e. RH = 3 %) | This corresponds to a dry salt |
| Tc = 80°C, Td = 34°C (i.e. RH = 11 %) | This corresponds to a partially hydrated salt |
| Tc = 80°C, Td = 47.1°C (i.e. RH = 23 %). | This corresponds to extreme conditions; pure salt becomes a deliquescent liquid |

The climatic conditions are periodically monitored with a hygrometric and thermal sensor Testo 650.

At the end of the test period, the recipients are removed. Once removed from the recipients the samples are prepared for weighing by ultrasonically cleaning in water and/or ethanol, dried and visually inspected. In cases where a significant layer of corrosion is observed the samples are also etched using the following solvents:

| Metal | Cleaning Solvent | Cleaning conditions (concentration, temperature, time) |
|---|---|---|
| Stainless steel | $HNO_3$ | 10%, 60°C, 20min |
| Steel | $H_2SO_4$ | 10%, 25°C, 5min |
| Copper | $H_2SO_4$ | 10%, 25°C, 1-3min |
| Brass | $H_2SO_4$ | 10%, 25°C, 1-3min |
| Nickel | $H_2SO_4$ | 10%, 25°C, 1-3min |
| Aluminium | $H_3PO_4 + CrO_3$ | 5% ($H_3PO$), 20g/L ($CrO_3$), 90°C, 5-10min |
| Zinc | $NH_4Cl$ | 100g/L, 70°C, 2-5min |

The cleaned samples are then weighted and the corrosion rate is determined by the formula described for example in ASTM G1-03:

$$v = \frac{\Delta m}{At\rho},$$

where A is the exposed area (m$^2$), t the exposition time (year), $\rho$ the density of the sample (kg/m$^3$) and $\Delta m$ the difference of mass of the sample between the start and the end of the exposition.

The experiment is repeated using grains of porous silicagel having the hygroscopic salt arranged within the pores of the silicagel. The porous silicagel has a specific surface area between 300 and 350 m$^2$/g and a porous volume between 0.8 and 1.15 cm$^3$/g

For the pairing silicagel + $SrBr_2$, the amount of strontium bromide in the grains with respect to the total weight of grains is about 48%.

For the pairing silicagel + $CaCl_2$, the amount of calcium chloride in the grains with respect to the total weight of grains is about 43%.

The following corrosion rates were obtained, for each pairing metal/hygroscopic salt (in a crystal form or enclosed within the pores of a porous matrix):

| Pairing | Corrosion rate (μm/ year) | Test conditions Tc (°C) | Test conditions Td (°C) |
|---|---|---|---|
| Brass/ $CaCl_2$ | 1 | 80 | 47.1 |
| Brass/silicagel+$CaCl_2$ | 18 | 80 | 47.1 |
| Steel/ $CaCl_2$ | 6 | 80 | 47.1 |
| Steel/silicagel+ $CaCl_2$ | 320 | 80 | 47.1 |

(continued)

| Pairing | Corrosion rate ($\mu$m/ year) | Test conditions Tc (°C) | Test conditions Td (°C) |
|---|---|---|---|
| Copper/ $CaCl_2$ | 2 | 80 | 47.1 |
| Copper/silicagel+ $CaCl_2$ | 13 | 80 | 47.1 |
| Nickel/ $CaCl_2$ | not measurable | 80 | 47.1 |
| Nickel/silicagel+ $CaCl_2$ | not measurable | 80 | 47.1 |
| Zinc/ $CaCl_2$ | 141 | 80 | 47.1 |
| Zinc/silicagel+ $CaCl_2$ | 2 | 80 | 47.1 |
| Aluminium/ $CaCl_2$ | 27 | 80 | 47.1 |
| Aluminium/ silicagel + $CaCl_2$ | not measurable | 80 | 47.1 |
| Stainless steel 316L/ $CaCl_2$ | not measurable | 80 | 47.1 |
| Stainless steel 316L/ silicagel + $CaCl_2$ | pitting | 80 | 47.1 |
| Stainless steel 304L/ $CaCl_2$ | not measurable | 80 | 47.1 |
| Stainless steel 304L/ silicagel + $CaCl_2$ | pitting | 80 | 47.1 |
| Bronze/ $CaCl_2$ | 9 | 80 | 47.1 |
| Bronze /silicagel+ $CaCl_2$ | 6 | 80 | 47.1 |
| Brass/ $CaCl_2$ | 1 | 80 | 34 |
| Brass/silicagel+$CaCl_2$ | 11 | 80 | 34 |
| Steel/ $CaCl_2$ | 4 | 80 | 34 |
| Steel/silicagel+ $CaCl_2$ | 4 | 80 | 34 |
| Nickel/ $CaCl_2$ | 1 | 80 | 34 |
| Nickel/silicagel+ $CaCl_2$ | not measurable | 80 | 34 |
| Copper/ $CaCl_2$ | 8 | 80 | 34 |
| Copper/silicagel+ $CaCl_2$ | 4 | 80 | 34 |
| Zinc/ $CaCl_2$ | not measurable | 80 | 34 |
| Zinc/silicagel+ $CaCl_2$ | 10 | 80 | 34 |
| Aluminium/ $CaCl_2$ | 1 | 80 | 34 |
| Aluminium/silicagel+ $CaCl_2$ | not measurable | 80 | 34 |
| Bronze / $CaCl_2$ | 8 | 80 | 34 |
| Bronze / silicagel+ $CaCl_2$ | 7 | 80 | 34 |
| Bronze / $SrBr_2$ | 33 | 80 | 34 |
| Bronze / silicagel+ $SrBr_2$ | 8 | 80 | 34 |
| Brass/ $CaCl_2$ | 8 | 80 | 10.1 |
| Brass/silicagel+$CaCl_2$ | 2 | 80 | 10.1 |
| Steel/ $CaCl_2$ | not measurable | 80 | 10.1 |
| Steel/silicagel+ $CaCl_2$ | not measurable | 80 | 10.1 |
| Nickel/ $CaCl_2$ | <1 | 80 | 10.1 |
| Nickel/silicagel+ $CaCl_2$ | 1 | 80 | 10.1 |

(continued)

| Pairing | Corrosion rate ($\mu$m/ year) | Test conditions Tc (°C) | Test conditions Td (°C) |
|---|---|---|---|
| Copper/ $CaCl_2$ | 2 | 80 | 10.1 |
| Copper/silicagel+ $CaCl_2$ | 2 | 80 | 10.1 |
| Zinc/ $CaCl_2$ | not measurable | 80 | 10.1 |
| Zinc/silicagel+ $CaCl_2$ | 3 | 80 | 10.1 |
| Aluminium/ $CaCl_2$ | 1 | 80 | 10.1 |
| Aluminium/silicagel+ $CaCl_2$ | 1 | 80 | 10.1 |
| Brass/ $CaCl_2$ | 1 | 35 | 10.1 |
| Brass/silicagel+$CaCl_2$ | not measurable | 80 | 10.1 |
| Steel/ $CaCl_2$ | 2 | 35 | 10.1 |
| Steel/silicagel+ $CaCl_2$ | 1 | 35 | 10.1 |
| Nickel/ $CaCl_2$ | not measurable | 80 | 10.1 |
| Nickel/silicagel+ $CaCl_2$ | 1 | 35 | 10.1 |
| Copper/ $CaCl_2$ | 4 | 35 | 10.1 |
| Copper/silicagel+ $CaCl_2$ | 1 | 35 | 10.1 |
| Zinc/ $CaCl_2$ | 4 | 35 | 10.1 |
| Zinc/silicagel+ $CaCl_2$ | 3 | 35 | 10.1 |
| Aluminium/ $CaCl_2$ | 2 | 35 | 10.1 |
| Aluminium/silicagel+ $CaCl_2$ | 2 | 35 | 10.1 |
| Steel/$SrBr_2$ | 1387 | 80 | 56.1 |
| Brass/ $SrBr_2$ | 20 | 80 | 56.1 |
| Nickel/ $SrBr_2$ | 4 | 80 | 56.1 |
| Copper/ $SrBr_2$ | 117 | 80 | 56.1 |
| Zinc/ $SrBr_2$ | 70 | 80 | 56.1 |
| Aluminium/ $SrBr_2$ | not measurable | 80 | 56.1 |
| Stainless steel 304L/ $SrBr_2$ | pitting | 80 | 56.1 |
| Stainless steel 316L / $SrBr_2$ | pitting | 80 | 56.1 |
| Steel/$SrBr_2$ | 300 | 80 | 48.3 |
| Brass/ $SrBr_2$ | 11 | 80 | 48.3 |
| Nickel/ $SrBr_2$ | 4 | 80 | 48.3 |
| Copper/ $SrBr_2$ | 80 | 80 | 48.3 |
| Zinc/ $SrBr_2$ | 26 | 80 | 48.3 |
| Aluminium/ $SrBr_2$ | passivation | 80 | 48.3 |
| Stainless steel 304L/ $SrBr_2$ | pitting | 80 | 48.3 |
| Stainless steel 316L / $SrBr_2$ | pitting | 80 | 48.3 |
| Steel/$SrBr_2$ | 52 | 65 | 64 |
| Brass/ $SrBr_2$ | 2 | 65 | 64 |
| Nickel/ $SrBr_2$ | 12 | 65 | 64 |

(continued)

| Pairing | Corrosion rate ($\mu$m/year) | Test conditions Tc (°C) | Test conditions Td (°C) |
|---|---|---|---|
| Copper/ $SrBr_2$ | 26 | 65 | 64 |
| Zinc/ $SrBr_2$ | 46 | 65 | 64 |
| Aluminium/ $SrBr_2$ | passivation | 65 | 64 |
| Stainless steel 304L/ $SrBr_2$ | 12 | 65 | 64 |
| Stainless steel 316L / $SrBr_2$ | pitting | 65 | 64 |
| Steel/$SrBr_2$ | 52 | 65 | 33 |
| Brass/ $SrBr_2$ | 15 | 65 | 33 |
| Nickel/ $SrBr_2$ | 4 | 65 | 33 |
| Copper/ $SrBr_2$ | 9 | 65 | 33 |
| Zinc/ $SrBr_2$ | 18 | 65 | 33 |
| Aluminium/ $SrBr_2$ | not measurable | 65 | 33 |
| Stainless steel 304L/ $SrBr_2$ | pitting | 65 | 33 |
| Stainless steel 316L / $SrBr_2$ | pitting | 65 | 33 |
| Steel/silicagel+$SrBr_2$ | 12 | 80 | 56.1 |
| Brass/ silicagel+$SrBr_2$ | 2 | 80 | 56.1 |
| Nickel/ silicagel+ $SrBr_2$ | 1 | 80 | 56.1 |
| Copper/ silicagel+$SrBr_2$ | 2 | 80 | 56.1 |
| Zinc/ silicagel+$SrBr_2$ | 12 | 80 | 56.1 |
| Aluminium/ silicagel+$SrBr_2$ | 2 | 80 | 56.1 |
| Stainless steel 304L /silicagel+$SrBr_2$ | 2 | 80 | 56.1 |
| Stainless steel 316L /silicagel+$SrBr_2$ | not measurable | 80 | 56.1 |

The composition and purity of the metals tested was:

- Steel: low-carbon steel St37;
- Copper: commercial purity;
- Zinc: commercial purity;
- Nickel: nickel "290", 99.9% purity.
- Aluminium: aluminium AlMgSi1;
- Brass: 31% Zn and 69% Cu;
- Bronze: 94% Cu and 6% Sn, no P
- Stainless steel 304L at least 18 wt% Cr and 8 % wt Ni;
- Stainless steel 316L at least 16 wt% Cr and 10 % wt Ni.

The calcium chloride salt used during the tests is a salt manufactured by Solvay and has a purity of 94%. The strontium bromide is manufactured by Alfa Aesar or Sigma Aldrich and has a purity of 99%.
Suitable combinations for a heating system are pairings having a corrosion rate less than 15 $\mu$m/year, preferably less than 10 $\mu$m/year. If no corrosion can be measured or no corrosion is visible on the surface of the metal, the pairing is accepted. The pairing is also accepted in the case of passivation of the surface.
In case of pitting corrosion, the pairing is rejected, notably because pitting corrosion creates unsuitable mechanical stress for such a system.
Where a pairing of silicagel + hygroscopic salt was used, this pairing was prepared and analysed as follows.

A porous matrix comprising grains of silicagel (having a specific surface area between 300 and 350 $m^2$/g and a porous volume between 0.8 and 1.15 $cm^3$/g) was impregnated 3 times with intervening drying by a solution of calcium chloride having a concentration of 20%. The volume of the impregnation solution used for each impregnation was equal to the pre-established porous volume of the grains being impregnated. The final amount of calcium chloride within the grains of the silicagel with respect to the total weight of the grains was measured as 42.92%.

Impregnated grains were analysed using a scanning electron microscope as shown in Fig 2. Grains were imprisoned in an inert resin or matrix. This was polished to provide a cross section through grains that could be analysed using an electron microscope. Chemical analysis was obtained using an EDX analyser provided with the scanning electron microscope. During sample preparation and analysis it was ensured:

- that the planarity of the surface was sufficient to provide a quantitative chemical analysis;
- that the preparation technique did not bring any element that would interfere with chemical analyses (i.e. in the case of EDX, peaks should not overlap). For example, a conductive carbon layer should not be deposited before imaging if the composite contains activated carbon;
- that the composite material was not contaminated by any other mean, for example, the polishing media;
- that none of the elements to be measured was removed by the preparation technique.

Once the sample was imaged, it was verified that no "crust" of salt was present on the outer areas of the cross section. Such a crust would imply an interface between an imperfectly impregnated core and an outer area. A check using EDX can be done in case of doubt. On Fig. 2, no such phenomenon can be observed.

An analysis zone was defined across the width of a grain as an inscribed rectangle with at least three corners in contact with the grain periphery. The length of the analysis zone should be at least 1/10 of the diameter of the grain and the ratio length/width should be equal to 10. Preferably, the analysis zone passes through the centre of the grain. The analysis zone was then divided into ten identical juxtaposed squares numbered sequentially from 1 to 10, as shown in Fig. 2.

Square 1 (at the periphery of the grain) defines the peripheral zone and square 5 towards the centre of the grain defines the central zone at which the concentrations were determined. Table 2 gives the elements analysed (any other element was excluded from the analysis) and the condition used to verify a "good quality of impregnation":

Table 2

| Pairing | Elements analysed | Impregnation considered of good quality if: |
|---|---|---|
| silicagel and calcium chloride | Si, O, Ca, Cl | $\left(\dfrac{[Ca]}{[Si]}\right)_5 \geq 0.7\left(\dfrac{[Ca]}{[Si]}\right)_1$ |
| silicagel and strontium bromide | Si, O, Sr, Br | $\left(\dfrac{[Sr]}{[Si]}\right)_5 \geq 0.7\left(\dfrac{[Sr]}{[Si]}\right)_1$ |

In Table 2, [x] denotes the mass percentage of element x and the indices "1" and "5" denote measurements performed on squares 1 and 5 respectively.

The mass percentages of Ca, Cl, Si and O were measured. On square 1, [Ca]/[Si] = 0.3255 and on square 5, [Ca]/[Si] = 0.6307.

Preferably, the measurement is repeated on a plurality of grains and the average is taken.

Thus, in this example the central zone hygroscopic metal concentration was 1.94 times the times the peripheral zone hygroscopic metal concentration (HMCc = 1.94 HMCp); this satisfies the condition HMCc ≥ 0.7 HMCp.

**Claims**

1. A hygroscopic salt apparatus comprising a combination of:

    - a heat storage medium comprising a hygroscopic salt; and
    - a material of a metal part of the apparatus susceptible to come into contact with the hygroscopic salt;

    **characterised in that** the combination is selected from the group consisting of:

- an alkaline earth chloride arranged within a porous matrix and a material selected from the group consisting of: aluminium, bronze, nickel, copper and combination thereof;
- an alkaline earth bromide arranged within a porous matrix and a material selected from the group consisting of: stainless steel, steel, nickel, copper, zinc, aluminium, bronze and combination thereof;
- an exposed alkaline earth chloride in solid form and a material selected from the group consisting of: brass, nickel and combination thereof;
- an exposed alkaline earth bromide in solid form and a material selected from the group consisting of: nickel and combination thereof.

2. An apparatus according to claim 1 wherein the apparatus is a hygroscopic salt heating system.

3. An apparatus according to claim 1 or claim 2, wherein the hygroscopic salt is arranged within grains of a porous matrix.

4. An apparatus according to any preceding claim, wherein the porous matrix is selected from the group consisting of silicagel and activated carbon.

5. An apparatus according to claim 3 or claim 4, wherein the grains have a peripheral zone and a central zone, the peripheral zone of a grain being a portion of the grain extending from a periphery of the grain towards the centre of the grain for a distance of about 1/10th of the diameter of the grain, and the central zone of a grain being a portion of the grain extending from the centre of the grain for a distance of about 1/10th of the diameter of the grain towards the periphery of the grain;
wherein the peripheral zone has a peripheral zone hygroscopic metal concentration HMCp expressed as the mass percentage of metal(s) of the hygroscopic salt(s) at the peripheral zone HMp divided by the mass percentage of i) the carbon of the activated carbon or ii) the silicon of the silicagel at the peripheral zone HPp (i.e. $HMCp = HMp/HPp$)
wherein the central zone has a central zone hygroscopic metal concentration HMCc expressed as the mass percentage of metal(s) of the hygroscopic salt(s) at the central zone HMc divided by the mass percentage of i) the carbon of the activated carbon or ii) the silicon of the silicagel at the central zone HPc (i.e. $HMCc = HMc/HPc$) and wherein the central zone hygroscopic metal concentration is greater than or equal to 0.7 times the peripheral zone hygroscopic metal concentration ($HMCc \geq 0.7\ HMCp$).

6. An apparatus according to claims 1 to 5, wherein the hygroscopic salt comprises calcium chloride.

7. An apparatus according to claims 1 to 5, wherein the hygroscopic salt comprises strontium bromide.

8. An apparatus according to any of claims 2 to 7, wherein the apparatus is a hygroscopic salt heating system configured:

- to release thermal energy at relative humidity between 2.5 and 40 % and a temperature between 20 and 80°C; and
- to absorb thermal energy at a temperature between 30 and 150°C; particularly at a temperature between 30 and 90°C, and a relative humidity between 2.5 and 40 %.

9. An apparatus according to any preceding claim, wherein the material forms part of a heat exchanger, a reaction vessel, a hygroscopic salt container, a hygroscopic salt support, a hygroscopic salt conveyor, a hygroscopic salt handling apparatus or a hygroscopic salt transportation apparatus.

10. A method for assessing the corrosion effect of a heat storage medium comprising a hygroscopic salt on a material comprising:

- subjecting a sample of a material to the heat storage medium in a first controlled atmosphere for a duration of at least 24 hours, the controlled atmosphere having a relative humidity between 0 and 100% and a temperature between 5 and 100°C;
- subjecting a sample of the material to the heat storage medium in a second controlled atmosphere for a duration of at least 24 hours, the controlled atmosphere having a relative humidity between 0 and 100% and a temperature between 5 and 100°C;

wherein the difference in temperature between the first and second controlled atmospheres is at least 20°C and the difference in relative humidity between the first and second controlled atmospheres is at least 20 percentage points.

**11.** A method according to claim 10, wherein the material comprises a metal.

**12.** Use of at least one of the following combinations of a heat storage medium and a material of a metal part of a hygroscopic salt apparatus:

- an alkaline earth chloride arranged within a porous matrix and a material selected from the group consisting of: aluminium, bronze, nickel, copper and combination thereof;
- an alkaline earth bromide arranged within a porous matrix and a material selected from the group consisting of: stainless steel, steel, nickel, copper, zinc, aluminium, bronze and combination thereof;
- an exposed alkaline earth chloride in solid form and a material selected from the group consisting of: brass, nickel, and combination thereof;
- an exposed alkaline earth bromide in solid form and a material selected from the group consisting of: nickel and combination thereof,

in the hygroscopic salt apparatus for reducing corrosion of the metal part of the hygroscopic salt apparatus comprising the material.

## Patentansprüche

**1.** Hygroskopische Salzvorrichtung, umfassend eine Kombination aus:

- einem Wärmespeichermedium, umfassend ein hygroskopisches Salz; und
- einem Material eines Metallteils der Vorrichtung, welches mit dem hygroskopischen Salz in Kontakt kommen kann;

**dadurch gekennzeichnet, dass** die Kombination ausgewählt ist aus der Gruppe, bestehend aus:

- einem innerhalb einer porösen Matrix angeordneten Erdalkalichlorid und einem Material, ausgewählt aus der Gruppe, bestehend aus: Aluminium, Bronze, Nickel, Kupfer und einer Kombination davon;
- einem innerhalb einer porösen Matrix angeordneten Erdalkalibromid und einem Material, ausgewählt aus der Gruppe, bestehend aus: Edelstahl, Stahl, Nickel, Kupfer, Zink, Aluminium, Bronze und einer Kombination davon;
- einem in fester Form frei vorliegenden Erdalkalichlorid und einem Material, ausgewählt aus der Gruppe, bestehend aus: Messing, Nickel und einer Kombination davon;
- einem in fester Form frei vorliegenden Erdalkalibromid und einem Material, ausgewählt aus der Gruppe, bestehend aus: Nickel und einer Kombination davon.

**2.** Vorrichtung nach Anspruch 1, wobei die Vorrichtung ein hygroskopisches Salzwärmesystem ist.

**3.** Vorrichtung nach Anspruch 1 oder Anspruch 2, wobei das hygroskopische Salz innerhalb von Körnern einer porösen Matrix angeordnet ist.

**4.** Vorrichtung nach einem der vorstehenden Ansprüche, wobei die poröse Matrix aus der Gruppe, bestehend aus Silikagel und Aktivkohle, ausgewählt ist.

**5.** Vorrichtung nach Anspruch 3 oder Anspruch 4, wobei die Körner eine periphere Zone und eine zentrale Zone aufweisen, wobei die periphere Zone eines Korns ein Abschnitt des Kornes ist, der sich von einer Peripherie des Korns zu der Mitte des Korns über eine Distanz von ungefähr 1/10 des Durchmessers des Korns erstreckt, und wobei die zentrale Zone des Korns ein Abschnitt des Korns ist, der sich von dem Zentrum des Korns über eine Distanz von ungefähr 1/10 des Durchmessers des Korns zu der Peripherie des Korns erstreckt; wobei die periphere Zone eine hygroskopische Metallkonzentration in der peripheren Zone HMCp aufweist, ausgedrückt als der Massenanteil des Metalls/ der Metalle des hygroskopischen Salzes/ der hygroskopischen Salze in der peripheren Zone HMp, geteilt durch den Massenanteil i) des Kohlenstoffs der Aktivkohle oder ii) des Siliziums des Silikagels in der peripheren Zone HPp (d. h. HMCp = HMp / HPp), wobei die zentrale Zone eine hygroskopische Metallkonzentration in der zentralen Zone HMCc, ausgedrückt als der Massenanteil des Metalls/ der Metalle des hygroskopischen Salzes/ der hygroskopischen Salze in der zentralen Zone HMc, geteilt durch den Massenanteil i) des Kohlenstoffs der Aktivkohle oder ii) des Siliziums des Silikagels in der zentralen Zone HPc (d. h. HMCc = HMc / HPc), und

wobei die hygroskopische Metallkonzentration in der zentralen Zone größer als oder gleich dem 0,7-fachen der hygroskopischen Metallkonzentration in der peripheren Zone ist (HMCc ≥ 0,7 HMCp).

6. Vorrichtung nach einem der Ansprüche 1 bis 5, wobei das hygroskopische Salz Calciumchlorid umfasst.

7. Vorrichtung nach einem der Ansprüche 1 bis 5, wobei das hygroskopische Salz Strontiumbromid umfasst.

8. Vorrichtung nach einem der Ansprüche 2 bis 7, wobei die Vorrichtung ein hygroskopisches Salzwärmesystem ist, welches eingerichtet ist:

  - um Wärmeenergie bei einer relativen Luftfeuchtigkeit zwischen 2,5 und 40% und einer Temperatur zwischen 20 und 80°C freizusetzen; und
  - um Wärmeenergie bei einer Temperatur zwischen 30 und 150°C; insbesondere bei einer Temperatur zwischen 30 und 90°C und einer relativen Luftfeuchtigkeit zwischen 2,5 und 40% aufzunehmen.

9. Vorrichtung nach einem der vorstehenden Ansprüche, wobei das Material einen Teil eines Wärmetauschers, eines Reaktionsgefäßes, eines Behälters für hygroskopisches Salz, eines Trägers für hygroskopisches Salz, einer Förderanlage für hygroskopisches Salz, einer Handhabungsvorrichtung für hygroskopisches Salz oder einer Transportvorrichtung für hygroskopisches Salz bildet.

10. Verfahren zur Beurteilung der Korrosionswirkung eines Wärmespeichermediums, umfassend ein hygroskopisches Salz auf einem Material, umfassend:

  - Aussetzen einer Probe eines Materials dem Wärmespeichermedium in einer ersten kontrollierten Atmosphäre für eine Dauer von mindestens 24 Stunden, wobei die kontrollierte Atmosphäre eine relative Luftfeuchtigkeit zwischen 0 und 100% und eine Temperatur zwischen 5 und 100°C aufweist;
  - Aussetzen einer Probe des Materials dem Wärmespeichermedium in einer zweiten kontrollierten Atmosphäre für eine Dauer von mindestens 24 Stunden, wobei die kontrollierte Atmosphäre eine relative Luftfeuchtigkeit zwischen 0 und 100% und eine Temperatur zwischen 5 und 100°C aufweist;

wobei der Temperaturunterschied zwischen den ersten und zweiten kontrollierten Atmosphären mindestens 20°C beträgt und der Unterschied in relativer Luftfeuchtigkeit zwischen den ersten und zweiten kontrollierten Atmosphären mindestens 20 Prozentpunkte beträgt.

11. Verfahren nach Anspruch 10, wobei das Material ein Metall umfasst.

12. Verwendung von mindestens einer der folgenden Kombinationen aus einem Wärmespeichermedium und einem Material eines Metallteils einer hygroskopischen Salzvorrichtung:

  - einem in einer porösen Matrix angeordneten Erdalkalichlorid und einem Material, ausgewählt aus der Gruppe, bestehend aus: Aluminium, Bronze, Nickel, Kupfer und einer Kombination davon;
  - einem in einer porösen Matrix angeordneten Erdalkalibromid und einem Material, ausgewählt aus der Gruppe, bestehend aus: Edelstahl, Stahl, Nickel, Kupfer, Zink, Aluminium, Bronze und einer Kombination davon;
  - einem in fester Form frei vorliegenden Erdalkalichlorid und einem Material, ausgewählt aus der Gruppe, bestehend aus: Messing, Nickel und einer Kombination davon;
  - einem in fester Form frei vorliegenden Erdalkalibromid und einem Material, ausgewählt aus der Gruppe, bestehend aus: Nickel und einer Kombination davon,

in der hygroskopischen Salzvorrichtung zur Korrosionsreduzierung des Metallteils der hygroskopischen Salzvorrichtung, welches das Material umfasst.


**Revendications**

1. Appareil à sel hygroscopique comprenant une combinaison constituée:

  - d'un milieu de stockage thermique comprenant un sel hygroscopique; et
  - du matériau d'une pièce métallique de l'appareil susceptible d'entrer en contact avec le sel hygroscopique;

**caractérisé en ce que** la combinaison est sélectionnée parmi le groupe consistant en:
un chlorure alcalino-terreux disposé dans une matrice poreuse et un matériau sélectionné parmi le groupe consistant en aluminium, bronze, nickel, cuivre et des combinaisons de ceux-ci;
- un bromure alcalino-terreux disposé dans une matrice poreuse et un matériau sélectionné parmi le groupe consistant en acier inoxydable, acier, nickel, cuivre, zinc, aluminium, bronze, et des combinaisons de ceux-ci;
- un chlorure alcalino-terreux exposé sous forme solide et un matériau sélectionné parmi le groupe consistant en laiton, nickel et des combinaisons de ceux-ci;
- un bromure alcalino-terreux exposé sous forme solide et un matériau sélectionné parmi le groupe consistant en nickel et des combinaisons de celui-ci.

2. Appareil selon la revendication 1, dans lequel l'appareil est un système de chauffage à sel hygroscopique.

3. Appareil selon la revendication 1 ou la revendication 2, dans lequel le sel hygroscopique est disposé dans les grains d'une matrice poreuse.

4. Appareil selon l'une quelconque revendication précédente, dans lequel la matrice poreuse est sélectionnée parmi le groupe consistant en gel de silice et charbon actif.

5. Appareil selon la revendication 3 ou la revendication 4, dans lequel les grains ont une zone périphérique et une zone centrale, la zone périphérique d'un grain étant la partie du grain s'étendant de la périphérie du grain vers le centre du grain sur une distance d'environ $1/10^e$ du diamètre du grain, et la zone centrale d'un grain étant la partie du grain s'étendant du centre du grain sur une distance d'environ $1/10^e$ du diamètre du grain vers la périphérie du grain;
dans lequel la zone périphérique présente une concentration en métal hygroscopique de zone périphérique HMCp exprimée en pour-cent en masse du/des métal/-aux du/des sel/s hygroscopique/s sur la zone périphérique HMp divisée par le pour-cent en masse de i) le charbon du charbon actif ou ii) le silicium du gel de silice sur la zone périphérique HPp (c'est-à-dire HMCp = HMp/HPp),
dans lequel la zone centrale présente une concentration en métal hygroscopique de zone centrale HMCc exprimée en pour-cent en masse du/des métal/-aux du/des sel/s hygroscopique/s sur la zone centrale HMc divisée par le pour-cent en masse de i) le charbon du charbon actif ou ii) le silicium du gel de silice sur la zone centrale HPc (c'est-à-dire HMCc= HMc/HPc) et dans lequel la concentration en métal hygroscopique de zone centrale est plus grande ou égale à 0,7 fois la concentration en métal hygroscopique de zone périphérique (HMCc ≥ 0,7 HMCp).

6. Appareil selon les revendications 1 à 5, dans lequel le sel hygroscopique comprend du chlorure de calcium.

7. Appareil selon les revendications 1 à 5, dans lequel le sel hygroscopique comprend du bromure de strontium.

8. Appareil selon l'une quelconque des revendications 2 à 7, dans lequel l'appareil est un système de chauffage à sel hygroscopique réalisé

- pour libérer de l'énergie thermique à une humidité relative entre 2,5 et 40% et à une température entre 20 et 80°C; et
- pour absorber l'énergie thermique à une température entre 30 et 150°C; particulièrement à une température entre 30 et 90°C, et à une humidité relative entre 2,5 et 40%.

9. Appareil selon une quelconque revendication précédente, dans lequel le matériau fait partie d'un échangeur de chaleur, d'un récipient réactionnel, d'un conteneur de sel hygroscopique, d'un support de sel hygroscopique, d'un convoyeur de sel hygroscopique, d'un appareil de manipulation de sel hygroscopique ou d'un appareil de transport de sel hygroscopique.

10. Procédé d'évaluation de l'effet de corrosion d'un milieu de stockage thermique comprenant un sel hygroscopique sur un matériau comprenant:

- la soumission d'un échantillon d'un matériau au milieu de stockage thermique dans une première atmosphère contrôlée pour une durée d'au moins 24 heures, l'atmosphère contrôlée présentant une humidité relative entre 0 et 100% et à une température entre 5 et 100°C;
- la soumission d'un échantillon d'un matériau au milieu de stockage thermique dans une deuxième atmosphère contrôlée pour une durée d'au moins 24 heures, l'atmosphère contrôlée présentant une humidité relative entre 0 et 100% et à une température entre 5 et 100°C;

dans lequel la différence de température entre la première et la deuxième atmosphère contrôlée est d'au moins 20°C et la différence d'humidité relative entre la première et la deuxième atmosphère contrôlée est d'au moins 20 points de pourcentage.

11. Procédé selon la revendication 10, dans lequel le matériau comprend un métal.

12. Utilisation d'au moins l'une des combinaisons suivantes d'un milieu de stockage thermique et du matériau de la partie métallique d'un appareil à sel hygroscopique:

- un chlorure alcalino-terreux disposé dans une matrice poreuse et un matériau sélectionné parmi le groupe consistant en aluminium, bronze, nickel, cuivre et des combinaisons de ceux-ci;
- un bromure alcalino-terreux disposé dans une matrice poreuse et un matériau sélectionné parmi le groupe consistant en acier inoxydable, acier, nickel, cuivre, zinc, aluminium, bronze, et des combinaisons de ceux-ci;
- un chlorure alcalino-terreux exposé sous forme solide et un matériau sélectionné parmi le groupe consistant en laiton, nickel et des combinaisons de ceux-ci;
- un bromure alcalino-terreux exposé sous forme solide et un matériau sélectionné parmi le groupe consistant en nickel et des combinaisons de celui-ci.

dans l'appareil à sel hygroscopique pour réduire la corrosion de la partie métallique de l'appareil à sel hygroscopique comprenant le matériau.

Fig. 1

1

101

30

102

10

20

Fig 2

SU70 20.0kV 15.0mm x120 SE(M) 6/26/2013                                400um

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4491172 A
- US 2013105727 A
- CN 102878838
- US 2003146409 A
- US 2008312359 A
- US 2012264600 A
- GB 1411286 A